# FASCICULE DE BREVET EUROPEEN

(11) **EP 4 769 117 B1**
(45) Date de publication et mention de la délivrance du brevet: **18.11.2026**
(21) Numéro de dépôt: 25226016.1
(22) Date de dépôt: 19.12.2025
(51) Int. Cl.: G06F 7/58, G11C 7/24, G11C 11/16, H10N 50/10

(54) **DISPOSITIF À BIT PROBABILISTE À LARGE PLAGE D'ENTRÉE**
PROBABILISTISCHE BITVORRICHTUNG MIT BREITEM EINGANGSBEREICH
WIDE INPUT RANGE PROBABILISTIC BIT DEVICE

(30) Priorité: 26.12.2024 FR 2415300
(43) Date de publication de la demande: 01.07.2026
(73) Titulaire: Commissariat à l'Energie Atomique et aux Energies Alternatives, 75015 Paris (FR); Centre National de la Recherche Scientifique, 75016 Paris (FR); Université Grenoble Alpes, 38400 Saint-Martin-d'Hères (FR); Institut Polytechnique de Grenoble, 38000 Grenoble (FR)
(72) Inventeur: DANOUCHI, Kamal, 38054 GRENOBLE Cedex 09 (FR); HUTIN, Louis, 38054 GRENOBLE Cedex 09 (FR); PRENAT, Guillaume, 38054 GRENOBLE Cedex 09 (FR)
(74) Mandataire: Atout PI Laplace

(56) Documents cités:
- US-A1- 2020 326 911
- US-A1- 2021 065 762
- US-A1- 2021 117 159
- US-A1- 2022 165 933
- BUNAIYAN SALEH ET AL: "MTJ-Based p-Bit Designs for Enhanced Tunability", 2022 IEEE NANOTECHNOLOGY MATERIALS AND DEVICES CONFERENCE (NMDC), IEEE, 17 November 2022 (2022-11-17), pages 14 - 16, XP034301704, DOI: 10.1109/NMDC46933.2022.10052369

## Description

L'invention concerne un dispositif à bit probabiliste basé sur une unité stochastique consistant à une jonction tunnel magnétique. Plus particulièrement, l'invention concerne une architecture particulière de contrôle de l'unité stochastique permettant d'étendre la plage d'entrée du dispositif à bit probabiliste.

Un générateur de bit probabiliste (Traduction de l'anglais probabilistic bit generator) est un dispositif qui génère une série de bits (sorties binaires de type 0 ou 1) de manière aléatoire en se basant sur des phénomènes physiques ou quantiques, assurant ainsi un niveau d'aléa ou d'entropie déterminé. Contrairement aux dispositifs classiques qui produisent des résultats déterministes, ce type de dispositif produit un 0 ou un 1 selon une probabilité ajustable en fonction des besoins de l'application. Ce type de sortie probabiliste est essentiel dans des domaines tels que la cryptographie, les algorithmes probabilistes et les simulations, où la génération de valeurs binaires aléatoires garantit la sécurité ou la représentativité des calculs. Cela signifie qu'au lieu de donner systématiquement un 0 ou un 1 de manière déterministe, le dispositif génère une série de bits pendant une durée prédéterminée dans laquelle la distribution entre des bits de 0 et des bits de 1 peut être contrôlée ou prédéfinie via des paramètres d'entrée. Par exemple, on pourrait définir une probabilité de 0,7 pour obtenir un 1 et de 0,3 pour obtenir un 0, ce qui produirait une distribution dans une série de bits (bit word en anglais) où environ 70 % des bits sont des 1 et 30 % sont des 0. Cette distribution probabiliste distingue le générateur de bit probabiliste des générateurs de nombres pseudo-aléatoires, car il s'appuie sur des sources d'incertitude physique (comme le bruit quantique ou thermique ou magnétique), produisant un véritable aléa au niveau des bits.

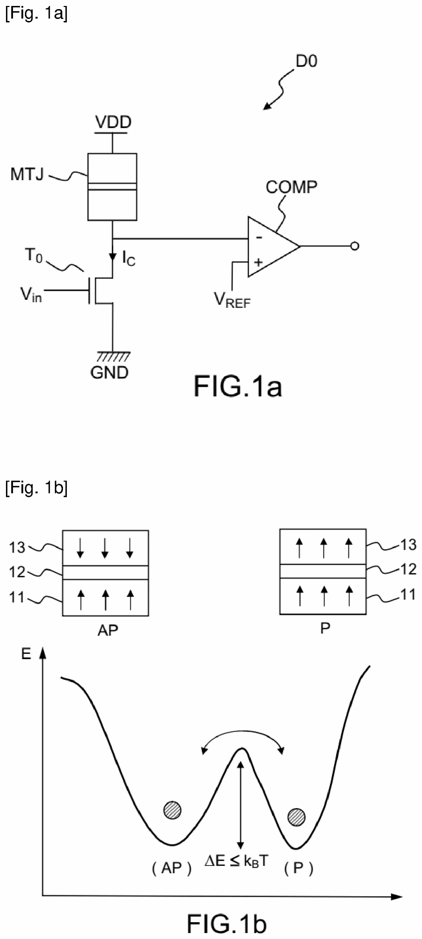

Les dispositifs générateurs de bit probabiliste à base de jonction tunnel magnétique présentent une solution prometteuse pour exploiter les fluctuations de l'état de polarisation magnétique dans une telle structure. La figure 1a illustre le schéma électrique d'un générateur de bit probabiliste D0 selon l'état de l'art. Le générateur de bit probabiliste D0 comprend une jonction tunnel magnétique MTJ, un transistor de contrôle T₀ et un comparateur COMP. La jonction tunnel magnétique MTJ est un pilier magnéto résistif comprenant un empilement de couches 11,12,13. L'empilement comprend une première couche 11 ferromagnétique de référence dans laquelle la direction de la polarisation magnétique est fixe et uniforme. L'empilement comprend en outre une seconde couche 13 ferromagnétique dans laquelle la direction de la polarisation magnétique est variable. L'empilement comprend en outre une couche barrière 12 d'oxyde confinée entre la première et la seconde couche ferromagnétique 11,13. La couche barrière 12 joue un rôle crucial dans l'effet tunnel magnétorésistif, permettant aux électrons de traverser par effet tunnel quantique. La première couche ferromagnétique 11 sert de référence pour détecter les changements de magnétisation dans la couche ferromagnétique libre 13. Le principe de fonctionnement du pilier MTJ magnétorésistif repose sur le changement de la résistance électrique en fonction de l'orientation de polarisation magnétique de la couche ferromagnétique libre 13 par rapport à celle dans la couche ferromagnétique de référence 11 référence. Lorsque les aimantations des couches libres et de référence 11,13 sont parallèles, la résistance électrique est faible et on parle d'un état résistif bas P. Lorsque les aimantations sont antiparallèles, la résistance électrique est élevée et on parle d'un état résistif haut AP. Le dimensionnement de la jonction tunnel magnétique MTJ est tel que les moments magnétiques des couches fluctuent entre différentes orientations sous l'influence des fluctuations thermiques, même en l'absence de champ magnétique externe. Ces fluctuations sont suffisamment importantes par rapport à la barrière d'énergie qui sépare les deux états résistifs, pour que la magnétisation ne soit plus stable dans une direction fixe. On parle ici d'un fonctionnement en « régime de fluctuation » où d'un état « superparamagnétique », contrairement aux mémoires magnétorésistives où les couches magnétiques conservent leur orientation suite à une programmation. En effet, dans une mémoire magnéto-résistive, la barrière d'énergie entre les deux états résistifs est hors de portée de l'énergie thermique avec une amplitude supérieure à 40xk_{b}T avec k_{b} la constante de Boltzmann et T la température du fonctionnement de la mémoire. Le fonctionnement de la jonction tunnel superparamagnétique MTJ est illustré par le diagramme d'énergie de la figure 1b qui illustre un premier état résistif P et un second état résistif AP séparés par une barrière d'énergie ΔE inférieure ou égale à dix fois l'énergie thermique k_{b}T, avec k_{b} la constante de Boltzmann et T la température du fonctionnement du générateur D0. La probabilité respective de génération de bits 0 (état résistif haut ou inversement selon la convention choisie) et de bits 1 (état résistif bas ou inversement selon la convention choisie) par la jonction tunnel magnétique MTJ dépend de l'intensité du courant de polarisation Ic qui la traverse. L'intensité du courant Ic est régulée par le transistor de contrôle T₀ monté en série avec la jonction tunnel magnétique MTJ entre un nœud d'alimentation fournissant la tension d'alimentation VDD et la masse électrique GND. Le comparateur COMP est configuré pour comparer la chute de tension à travers la jonction tunnel magnétique avec une tension de référence V_{REF}, pour déterminer en continu l'état résistif aléatoire de ladite jonction tunnel magnétique.

Le courant de polarisation Ic est commandé par la tension d'entrée Vᵢₙ appliquée sur la grille du transistor de contrôle T₀. Le transistor de contrôle T₀ est un transistor de type CMOS. La tension d'entrée Vᵢₙ est avantageusement choisie de manière à fonctionner en régime linéaire ou en régime ohmique. L'augmentation de la tension d'entrée Vᵢₙ engendre l'augmentation du courant de polarisation Ic. L'augmentation du courant de polarisation Ic induit l'augmentation de la probabilité P(1) d'avoir un état résistif haut AP (équivalent à un bit « 1 » selon la convention choisie). Inversement, la diminution du courant de polarisation Ic induit l'augmentation de la probabilité P(0) d'avoir un état résistif bas P (équivalent à un bit « 0 » selon la convention choisie). Dans ce contexte, un problème technique majeur est rencontré, à savoir la limitation de la plage dynamique d'entrée pour le contrôle de la distribution des « 1 » et des « 0 » dans la séquence de bits générée. Soit V_{in,min} la tension de contrôle permettant d'obtenir la distribution de P(0)=99% P(1)=1%, avec P(0) la probabilité d'avoir un bit 0 et P(1) la probabilité d'avoir un bit. Soit V_{in,max} la tension de contrôle permettant d'obtenir la distribution de P(0)=1% P(1)=99%. La plage dynamique de la tension d'entrée Vᵢₙ est ainsi définie par V_{in,max} - V_{in,min} Dans les solutions de l'état de l'art, la plage dynamique d'entrée est très réduite avec une amplitude inférieure ou égale à 0,2V. Cela limite drastiquement la stabilité et la précision du générateur de bit probabiliste.

Pour pallier les limitations des solutions existantes, l'invention propose un générateur de bit probabiliste dans lequel la jonction tunnel est commandée par une tension sur la grille arrière d'un transistor sur SOI de manière à élargir la plage dynamique d'entrée et ainsi avoir un meilleur contrôle de la probabilité d'obtenir un état résistif haut ou bas. Le générateur selon l'invention permet d'atteindre des plages dynamiques de l'ordre de 1V ce qui présente un élargissement de 5 fois par rapport aux plages dynamiques observées pour les solutions selon l'état de l'art.

### Résumé /Revendications

L'invention a pour objet un générateur de bit probabiliste comprenant :
- une jonction tunnel magnétique ayant une résistance qui fluctue entre au moins deux états résistifs distincts selon sa magnétisation;
- un circuit de polarisation configuré pour injecter un courant de commande à travers la jonction tunnel magnétique variable selon une première tension d'entrée ; le circuit de polarisation comprenant :
   ∘ un transistor de contrôle monté en série avec la jonction tunnel magnétique entre deux nœuds d'alimentation et comprenant une couche isolante enterrée dans un substrat semi-conducteur formant une grille arrière ;
- des moyens de contrôle configurés pour appliquer la première tension d'entrée sur ladite grille arrière ;
- un circuit de détection configuré pour générer un signal de détection variable selon l'état résistif de la jonction tunnel magnétique.

Selon un aspect particulier de l'invention, la jonction tunnel magnétique est une jonction tunnel super-paramagnétique.

Selon un aspect particulier de l'invention, le transistor de contrôle est un transistor de type « silicium sur isolant totalement déserté ».

Selon un aspect particulier de l'invention, le circuit de détection est un comparateur ayant une première entrée connectée à une première extrémité de la jonction tunnel magnétique et une seconde entrée destinée à recevoir une tension de référence et un nœud de sortie pour générer le signal de détection .

Selon un aspect particulier de l'invention, le générateur comprend en outre un circuit calculateur configuré pour générer un bit probabiliste partir du signal de détection par échantillonnage ou par calcul de moyenne en déterminant la proportion de chaque état résistifs de la jonction tunnel magnétique pendant une période prédéterminée.

Selon un aspect particulier de l'invention, la jonction tunnel magnétique comprend :
- une première couche ferromagnétique de référence dans laquelle la direction de la polarisation magnétique est fixe ;
- une seconde couche ferromagnétique dans laquelle la direction de la polarisation magnétique est variable ;
- une couche barrière tunnel d'oxyde confinée entre la première et la seconde couche ferromagnétique.

Selon un aspect particulier de l'invention, l'épaisseur de la seconde couche est inférieure à 10 nm.

Selon un aspect particulier de l'invention, le diamètre de la jonction tunnel magnétique est inférieur à 100 nm.

Selon un aspect particulier de l'invention, le transistor de contrôle est monté en diode.

Selon un aspect particulier de l'invention, le circuit de polarisation est un miroir de courant comprenant une première branche d'alimentation couplée à une seconde branche d'alimentation comprenant au moins le transistor de contrôle et la jonction tunnel magnétique montés en série.

Selon un aspect particulier de l'invention, la première branche d'alimentation comprenant un second transistor de contrôle ayant une seconde couche isolante enterrée formant une grille arrière associée, les moyens de contrôle étant configurés pour appliquer une seconde tension d'entrée sur la grille arrière second transistor de contrôle .

D'autres caractéristiques et avantages de la présente invention apparaîtront mieux à la lecture de la description qui suit en relation aux dessins annexés suivants.
La figure 1a illustre un générateur D0 de bit probabiliste selon l'état de l'art. Cette figure a déjà été décrite.
La figure 1b illustre un diagramme d'énergie du générateur D0 de bit probabiliste selon l'état de l'art. Cette figure a déjà été décrite.
La figure 2a illustre un générateur D1 de bit probabiliste selon un premier mode de réalisation de l'invention.
La figure 2b illustre des vues en coupe de l'implémentation de quatre transistors différents de type FDSOI.
La figure 3 illustre un générateur D1 de bit probabiliste selon un deuxième mode de réalisation de l'invention.
La figure 4 illustre un générateur D1 de bit probabiliste selon un troisième mode de réalisation de l'invention.
La figure 5 illustre un générateur D1 de bit probabiliste selon un quatrième mode de réalisation de l'invention.
La figure 6 illustre la probabilité d'un état logique haut « 1 » en fonction de la tension d'entrée pour le générateur selon l'invention par rapport à un générateur selon l'état de l'art.

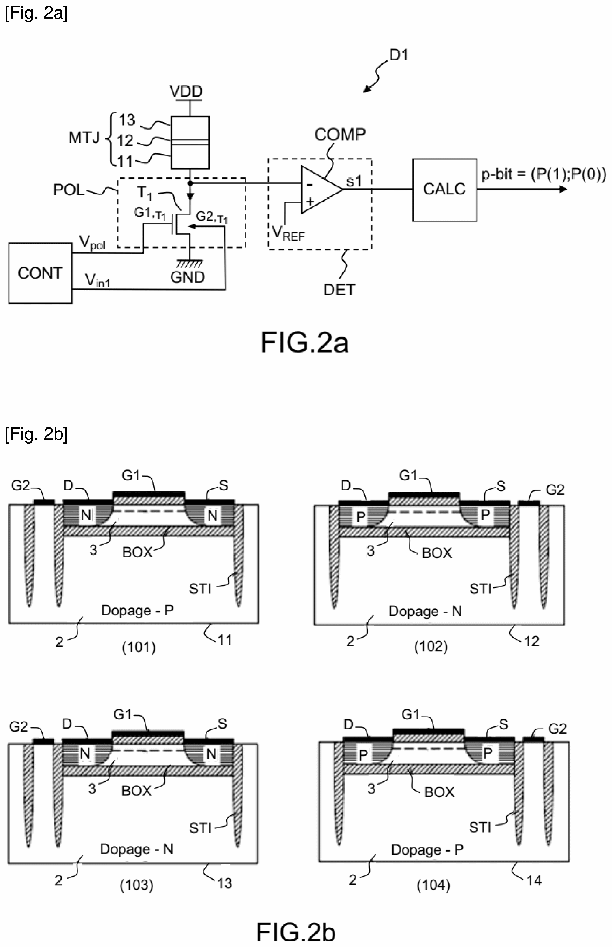

La figure 2a illustre un générateur D1 de bit probabiliste selon un premier mode de réalisation de l'invention. Le générateur D1 de bit probabiliste p-bit comprend une jonction tunnel magnétique MTJ, un circuit de polarisation POL, un circuit de détection DET et un circuit calculateur CALC. La jonction tunnel magnétique MTJ est dimensionnée de manière à fonctionner en régime de fluctuation en réponse à l'agitation thermique. La jonction tunnel magnétique MTJ est formée par un empilement de couches. L'empilement comprend une première couche 11 ferromagnétique de référence dans laquelle la direction de la polarisation magnétique est fixe et uniforme. L'empilement comprend en outre une seconde couche 13 ferromagnétique dans laquelle la direction de la polarisation magnétique est variable. L'empilement comprend en outre une couche barrière 12 d'oxyde confinée entre la première et la seconde couche ferromagnétique 11,13. Le diamètre (ou la diagonale selon la forme) de la jonction tunnel magnétique MTJ est inférieur à 100 nm. Plus avantageusement, l'épaisseur de la seconde couche 13 est inférieure à 10 nm. Cela permet d'abaisser la barrière d'énergie séparant le premier état résistif P et le second état résistif AP à une valeur inférieure ou égale dix fois l'énergie thermique k_{b}T et donc de réaliser une jonction tunnel super-paramagnétique MTJ. Pour rappel, une jonction tunnel super-paramagnétique présente un état résistif fluctuant où la magnétisation est instable sous l'influence thermique.

Le circuit de polarisation POL est configuré pour injecter un courant de commande Ic à travers la jonction tunnel magnétique MTJ de manière à contrôler la distribution entre les deux états résistifs de la jonction tunnel super-paramagnétique MTJ. Le circuit de polarisation POL est formé par un transistor de contrôle T₁ monté en série avec la jonction tunnel magnétique MTJ entre un nœud d'alimentation fournissant la tension d'alimentation VDD et la masse électrique GND. Le transistor de contrôle T₁ est réalisé sur une couche d'isolant enterrée dans le substrat est la technologie SOI, acronyme en anglais de Silicon-on-Insulator pouvant être traduit en « silicium sur isolant », et plus avantageusement sur un substrat de type FDSOI (acronyme de Fully Depleted Silicon-on-Insulator) pouvant être traduit en « silicium sur isolant totalement désertée". Pour mieux comprendre l'invention, la figure 2b illustre des vues en coupe de l'implémentation de quatre transistors différents de type FDSOI. Le schéma 101 est un transistor 11 de type NMOS à tension de seuil régulière (RVT pour Regular VT). Le schéma 102 est un transistor FDSOI 12 de type PMOS à tension de seuil régulière (PMOS-RVT). Le schéma 103 est un transistor FDSOI 13 de type NMOS à basse tension de seuil LVT (LVT pour Low VT). Le schéma 104 est un transistor FDSOI 14 de type PMOS à basse tension de seuil (PMOS-LVT). Le transistor 11 dans le schéma 101 de type NMOS-RVT selon la technologie FDSOI est réalisé sur un substrat 2 à base de semi-conducteur dopé P. Une couche de matériau diélectrique isolant, généralement un oxyde noté BOX, vient séparer l'ensemble composé des zones dopées N formant le drain D et la source S et la région du semi-conducteur 3 contenant le canal de conduction du reste du substrat 2. Une grille de commande G1 est obtenue par superposition d'une couche d'oxyde et d'une couche métallique sur la région 3 du canal de conduction de manière semblable à une grille d'un transistor MOS sur un substrat de semi-conducteur massif. Des tranchées latérales d'isolation STI en oxyde sont rajoutées de chaque côté du transistor 11 pour assurer une isolation électrique du composant. Des couches de matériau conducteur, généralement métalliques, sont déposées sur la grille G1, le drain D et la source S pour permettre la connexion électrique à ces terminaux. De plus, un terminal supplémentaire G2 est rajouté par le dépôt d'une couche métallique sur la région délimitée par deux tranchées latérales d'isolation STI adjacentes au transistor 11. L'application d'une tension électrique sur le terminal G2 permet de polariser la couche d'oxyde enterrée BOX qui joue le rôle d'une grille arrière. Cela permet de faire varier ainsi la tension de seuil Vₜₕ du transistor 1. Cette opération est communément désignée par le terme anglais « Back-Biasing ». Le transistor 12 de type PMOS-RVT du schéma 102 présente exactement la même structure que celui du schéma 101 sauf pour la distribution du dopage puisqu'il s'agit d'un transistor PMOS. Le substrat 2 est dopé N, le drain D et la source S sont dopés P. Concernant le transistor 13 de type NMOS-LVT, la seule différence avec le transistor 11 du schéma 101 est l'inversion du type de dopage du substrat 2 dopé N. Concernant le transistor 14 de type PMOS-LVT, la seule différence avec le transistor 12 du schéma 102 est l'inversion du type de dopage du substrat 2 dopé P. De manière générale, l'invention est réalisable par des transistors de type SOI ou par tout transistor ayant une couche d'isolant enterrée dans le substrat dont la conductance peut être contrôlée via une grille arrière connectée à la couche d'isolant enterrée.

Dans le générateur D1 de bit probabiliste selon l'invention, l'augmentation du courant de polarisation Ic induit l'augmentation de la probabilité P(1) d'avoir un état résistif haut AP (équivalent à un bit « 1 »). Inversement, la diminution du courant de polarisation Ic induit l'augmentation de la probabilité P(0) d'avoir un état résistif bas P (équivalent à un bit « 0 »). Le contrôle du courant de polarisation Ic est réalisé par l'application d'une tension d'entrée Vᵢₙ₁ sur la grille arrière G2,_{T1} du transistor de contrôle T₁ Le générateur D1 comprend des moyens de contrôle CONT configurés pour appliquer la tension d'entrée Vᵢₙ₁ variable sur la grille arrière G2,_{T1} et une tension de polarisation V_{POL} fixe sur la grille avant G1,_{T1} du transistor de contrôle T₁. La tension de polarisation V_{POL} est choisie telle que le transistor de contrôle fonctionne sous régime ohmique pour assurer un comportement linéaire du générateur. L'application de la tension d'entrée Vᵢₙ₁ sur la grille arrière G2,_{T1} permet de modifier la tension de seuil Vₜₕ (threshold voltage en anglais) du transistor T₁ ce qui permet un contrôle plus fin de la variation du courant de contrôle Ic et ainsi un contrôle plus précis de la distribution dans le bit probabiliste p-bit. Dans le transistor de contrôle T₁, la grille arrière est formée par la couche de diélectrique enterrée BOX commandée par le terminal G2,_{T1}. La couche de diélectrique enterrée BOX présente une capacité beaucoup plus faible par rapport à la grille avant G1,_{T1} du transistor T1. L'épaisseur de la couche isolante BOX enterrée est inférieure ou égale à 25nm. La capacité réduite permet un contrôle plus précis de la polarisation de la grille arrière G2,_{T1}, ce qui permet un réglage précis de la tension de seuil Vₜₕ du transistor de contrôle T₁. Il en résulte qu'en ajustant la tension de la grille arrière G2,_{T1} il devient possible d'obtenir un contrôle plus fin de la pente positive de la réponse sigmoïde en sortie du générateur de bit probabiliste, améliorant ainsi la sensibilité globale du dispositif. On obtient ainsi une plage dynamique d'entrée beaucoup plus large V_{in,max} - V_{in,min} avec une amplitude allant jusqu'à 1V.

Le transistor de contrôle T₁ peut être un transistor de type NMOS ou de type PMOS. Le transistor de contrôle T₁ peut être un transistor FDSOI de type LVT ou RVT.

Le circuit de détection DET est configuré pour générer un signal de détection s1 variable selon l'état résistif de la jonction tunnel magnétique MTJ. Le circuit de détection DET comprend un comparateur COMP pour comparer la chute de tension à travers la jonction tunnel magnétique MTJ par rapport à une tension de référence V_{REF} prédéterminée. La jonction tunnel magnétique MTJ et le transistor de contrôle T₁ forment un diviseur de tension. Le comparateur COMP comprend une première entrée connectée au nœud commun entre la jonction tunnel magnétique MTJ et le transistor de contrôle T₁ ; et une seconde entrée recevant la tension de référence V_{REF}. Lorsque la jonction tunnel magnétique MTJ est à un état résistif haut AP, la tension reçue par la première entrée du comparateur est inférieure à la tension de référence V_{REF} et le comparateur génère une tension de sortie égale à VDD, équivalent à un bit égal à « 1 ». Lorsque la jonction tunnel magnétique MTJ est à un état résistif bas P, la tension reçue par la première entrée du comparateur est supérieure à la tension de référence V_{REF} et le comparateur génère une tension de sortie égale à 0, équivalent à un bit égal à « 0 ».

Alternativement, le circuit de détection DET comprend un inverseur à la place du comparateur COMP. L'inverseur comprend une entrée connectée au nœud commun entre la jonction tunnel magnétique MTJ et le transistor de contrôle T₁. Lorsque la jonction tunnel magnétique MTJ est à un état résistif haut AP, la tension reçue par l'inverseur est inférieure à sa tension seuil de basculement. L'inverseur génère sur sa sortie un signal de sortie égal à VDD, équivalent à un bit égal à « 1 ». Lorsque la jonction tunnel magnétique MTJ est à un état résistif bas P, la tension reçue par l'inverseur est supérieure à sa tension seuil de basculement et l'inverseur génère une tension de sortie égale à 0, équivalent à un bit égal à « 0 ».

Le circuit calculateur CALC est configuré pour générer un bit probabiliste à partir du signal de détection s1 en déterminant la proportion de chaque état résistif de la jonction tunnel magnétique MTJ pendant une période prédéterminée. Le circuit calculateur est configuré pour calculer la distribution entre des bits à un état logique haut « 1 » et des bits à un état logique bas « 0 » dans une séquence de bits correspondant au signal de détection s1 pendant une durée prédéterminée. Par exemple, le circuit calculateur CALC est configuré pour échantillonner la sortie de détection s1 chaque 1ns pendant une période de 10µs. Le nombre de bits à « 1 » (ou des bits à « 0 ») est calculé pendant la période de 10µs, ce qui correspond à un échantillon de 10000 bits logiques pour déterminer la proportion de bits à « 1 » et à « 0 » ce qui correspond au bit probabiliste p-bit = (P(1),P(0)).

Alternativement, le circuit calculateur CALC est configuré pour calculer la moyenne du signal de détection s1 sur la durée de la période. La moyenne est proportionnelle au nombre de bits égal à « 1 » sur la période échantillonnée.

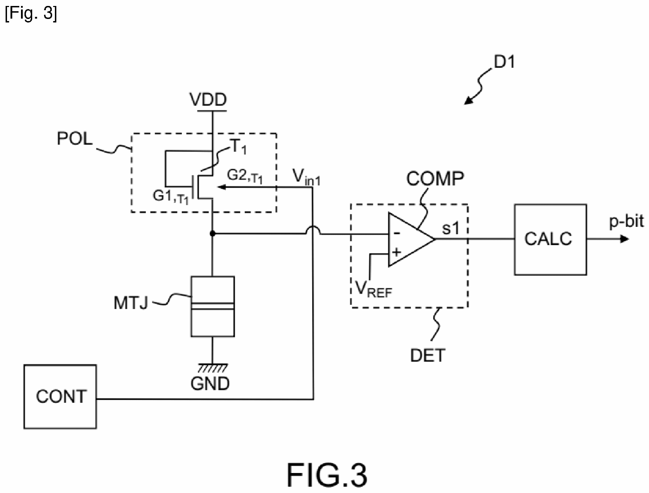

La figure 3 illustre un générateur D1 de bit probabiliste selon un deuxième mode de réalisation de l'invention. Le deuxième mode de réalisation reprend les mêmes caractéristiques et avantages techniques détaillés pour le premier mode de réalisation. Le deuxième mode de réalisation se distingue du premier par le montage du transistor de contrôle T₁ monté en diode. Le montage en diode du transistor de contrôle T₁ tout en maintenant l'application de la tension d'entrée Vᵢₙ₁ permet d'améliorer la stabilité et la linéarité du générateur D1 selon l'invention.

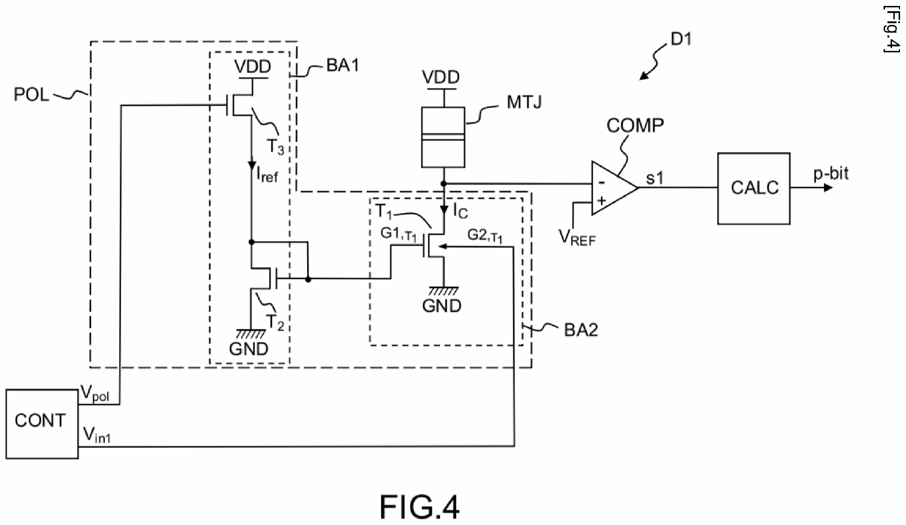

La figure 4 illustre un générateur D1 de bit probabiliste selon un troisième mode de réalisation de l'invention. Le troisième mode de réalisation reprend les mêmes caractéristiques et avantages techniques détaillés pour le premier mode de réalisation. Dans le générateur D1 selon le troisième mode de réalisation, le circuit de polarisation POL est réalisé par un miroir de courant apte à copier un courant de référence dans une autre branche du circuit avec une précision élevée. Le miroir de courant comprend une première branche d'alimentation BA1 couplée à une seconde branche d'alimentation BA2. La première branche comprend un transistor T3 de type PMOS monté en série avec un transistor T2 NMOS monté en diode. Le transistor T3 reçoit une tension de polarisation V_{POL} sur sa grille avant G1_{,T3} pour fixer l'intensité de I_{REF}. La grille avant G1_{,T2} est connectée à celle du transistor de contrôle T1 pour coupler les deux branches d'alimentation BA1,BA2. La grille arrière G2,_{T1} du transistor de contrôle T1 reçoit la tension d'entrée Vᵢₙ₁ générée par le circuit de contrôle CONT ce qui permet de moduler de manière plus précise l'intensité du courant qui parcourt la deuxième branche d'alimentation BA2 sur une plage dynamique d'entrée plus large allant jusqu'à 1V.

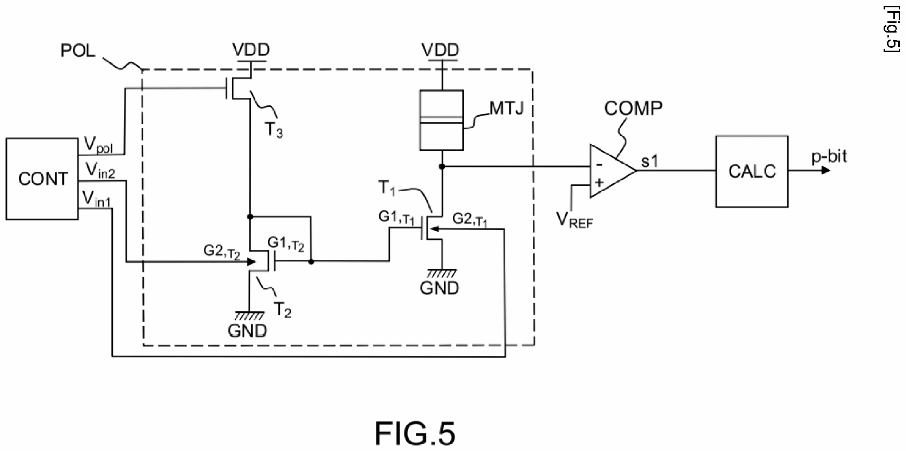

La figure 5 illustre un générateur D1 de bit probabiliste selon un quatrième mode de réalisation de l'invention. Le quatrième mode de réalisation reprend les mêmes caractéristiques et avantages techniques détaillés pour le troisième mode de réalisation. Dans le générateur D1 selon le quatrième mode de réalisation, le transistor T2 de la première branche reçoit également sur sa grille arrière G2,_{T2} une seconde tension d'entrée Vᵢₙ₂ générée par le circuit de contrôle CONT. Cela permet d'obtenir un double contrôle de la probabilité de bits à l'état logique haut « 1 » dans la séquence de bits générée. Ce mode de réalisation présente l'avantage de faciliter à retrouver un point de fonctionnement du circuit lorsque tension de polarisation V_{POL} fluctue en ajustant de manière symétrique les deux transistors T1,T2 du miroir de courant.

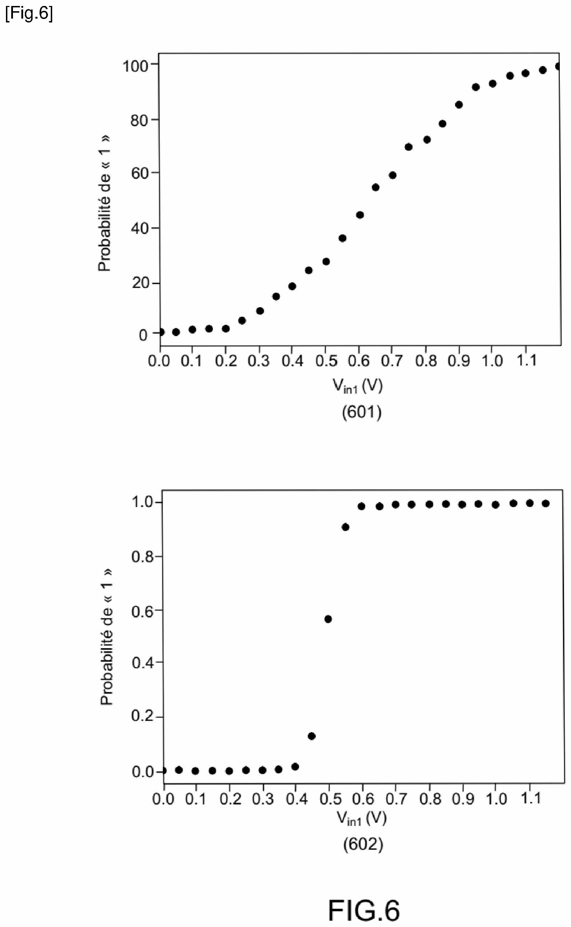

La figure 6 illustre la probabilité d'un état logique haut « 1 » en fonction de la tension d'entrée pour le générateur selon l'invention sur la courbe (601) par rapport à un générateur selon l'état de l'art sur la courbe (602).

Sur la courbe (602) la probabilité est quasi nulle pour des valeurs de tension d'entrée Vᵢₙ comprise entre 0V et 0,4V. La probabilité est supérieure à 0,9 à partir d'une tension d'entrée Vᵢₙ de 0,6V. La plage dynamique d'entrée observée pour un générateur selon l'état de l'art est ainsi égale à 0,2V. La pente de variation entre l'état P(1)=1% et P(1)=99% est forte ce qui limite la possibilité de contrôle de la probabilité de sortie. Sur la courbe (601) la probabilité est quasi nulle pour des valeurs de tension d'entrée Vᵢₙ₁ comprise entre 0V et 0,1V. La probabilité est supérieure à 0,9 à partir d'une tension d'entrée Vᵢₙ₁ de 1,1V. La plage dynamique d'entrée observée pour un générateur selon l'invention est ainsi égale à 1,0V. La pente de variation entre l'état P(1)=1% et P(1)=99% a été réduite permettant un contrôle plus précis de la probabilité de sortie.

Le générateur de bits probabiliste selon l'invention exploite les propriétés stochastiques d'une jonction tunnel magnétique MTJ pour produire des bits aléatoires ou pseudo-aléatoires avec une distribution contrôlée. Contrairement aux générateurs classiques, il utilise un transistor de type SOI, et plus avantageusement de type FDSOI, pour ajuster précisément le courant de commande de la jonction tunnel MTJ, modulant ainsi la probabilité d'obtenir un état résistif haut ou bas. Ce mécanisme permet une génération de bits directement influencée par les variations de la tension d'entrée, offrant une solution compacte, précise, et économe en énergie, particulièrement adaptée aux technologies intégrées. Cette innovation améliore la plage dynamique et la stabilité par rapport aux solutions existantes, élargissant ainsi les applications en cryptographie, intelligence artificielle, et systèmes neuromorphiques.

## Revendications

1. Générateur (D1) de bit probabiliste (p-bit) comprenant :
- une jonction tunnel magnétique (MTJ) ayant une résistance qui fluctue entre au moins deux états résistifs distincts (P, AP) selon sa magnétisation;
- un circuit de polarisation (POL) configuré pour injecter un courant de commande (Ic) à travers la jonction tunnel magnétique (MTJ) variable selon une première tension d'entrée (Vᵢₙ₁) ; le circuit de polarisation (POL) comprenant :
∘ un transistor de contrôle (T₁) monté en série avec la jonction tunnel magnétique (MTJ) entre deux nœuds d'alimentation (VDD, GND) et comprenant une couche isolante (BOX) enterrée dans un substrat semi-conducteur (2) formant une grille arrière (G2,_{T1}) ;
- des moyens de contrôle (CONT) configurés pour appliquer la première tension d'entrée (Vᵢₙ₁) sur ladite grille arrière (G2,_{T1});
- un circuit de détection (DET) configuré pour générer un signal de détection (s1) variable selon l'état résistif de la jonction tunnel magnétique (MTJ).

2. Générateur (D1) de bit probabiliste (p-bit) selon la revendication 1 dans lequel la jonction tunnel magnétique (MTJ) est une jonction tunnel super-paramagnétique.

3. Générateur de bit probabiliste (p-bit) selon l'une quelconque des revendications 1 ou 2 dans lequel le transistor de contrôle (T1) est un transistor de type « silicium sur isolant totalement déserté ».

4. Générateur (D1) de bit probabiliste (p-bit) selon l'une quelconque des revendications 1 à 3 dans lequel le circuit de détection (DET) est un comparateur (COMP) ayant une première entrée connectée à une première extrémité de la jonction tunnel magnétique (MTJ) et une seconde entrée destinée à recevoir une tension de référence (V_{REF}) et un nœud de sortie pour générer le signal de détection (s1).

5. Générateur (D1) de bit probabiliste (p-bit) selon l'une quelconque des revendications 1 à 4 comprenant en outre un circuit calculateur (CALC) configuré pour générer un bit probabiliste partir du signal de détection (s1) par échantillonnage ou par calcul de moyenne en déterminant la proportion de chaque état résistifs de la jonction tunnel magnétique (MTJ) pendant une période prédéterminée.

6. Générateur (D1) de bit probabiliste (p-bit) selon l'une quelconque des revendications 1 à 5 dans lequel la jonction tunnel magnétique (MTJ) comprend :
- une première couche (11) ferromagnétique de référence dans laquelle la direction de la polarisation magnétique est fixe ;
- une seconde couche (13) ferromagnétique dans laquelle la direction de la polarisation magnétique est variable ;
- une couche barrière tunnel (12) d'oxyde confinée entre la première et la seconde couche ferromagnétique (11,13) .

7. Générateur (D1) de bit probabiliste (p-bit) selon la revendication 6 dans lequel l'épaisseur de la seconde couche (13) est inférieure à 10 nm.

8. Générateur (D1) de bit probabiliste (p-bit) selon l'une quelconque des revendications 6 ou 7 dans lequel le diamètre de la jonction tunnel magnétique (MTJ) est inférieur à 100 nm.

9. Générateur (D1) de bit probabiliste (p-bit) selon l'une quelconque des revendications 1 à 8 dans lequel le transistor de contrôle (T1) est monté en diode.

10. Générateur (D1) de bit probabiliste (p-bit) selon l'une quelconque des revendications 1 à 8 dans lequel le circuit de polarisation (POL) est un miroir de courant comprenant une première branche d'alimentation (BA1) couplée à une seconde branche d'alimentation comprenant au moins le transistor de contrôle (T1) et la jonction tunnel magnétique (MTJ) montés en série.

11. Générateur (D1) de bit probabiliste (p-bit) selon la revendication 10 dans lequel la première branche d'alimentation (BA1) comprenant un second transistor de contrôle (T2) ayant une seconde couche isolante enterrée formant une grille arrière (G2,_{T2}) associée, les moyens de contrôle (CONT) étant configurés pour appliquer une seconde tension d'entrée (Vᵢₙ₂) sur la grille arrière (G2,_{T2}) second transistor de contrôle (T2).

## Patentansprüche

1. Generator (D1) für probabilistische Bits (p-Bit), umfassend:
- einen magnetischen Tunnelkontakt (MTJ), der einen Widerstand aufweist, welcher je nach seiner Magnetisierung zwischen mindestens zwei unterschiedlichen Widerstandszuständen (P, AP) schwankt;
- eine Polarisationsschaltung (POL), die so konfiguriert ist, dass sie durch den magnetischen Tunnelkontakt (MTJ) einen Ansteuerstrom (Ic) einspeist, der je nach einer ersten Eingangsspannung (*V*_{*in*1}) variieren kann; wobei die Polarisationsschaltung (POL) umfasst:
- einen Steuertransistor (T₁), der mit dem magnetischen Tunnelkontakt (MTJ) zwischen zwei Versorgungsknoten (VDD, GND) in Reihe geschaltet ist und eine in einem Halbleitersubstrat (2) vergrabene Isolierschicht (BOX) umfasst, die ein hinteres Gate (*G*2_{,*T*1}) bildet;
- Steuermittel (CONT), die so konfiguriert sind, dass sie die erste Eingangsspannung (Vᵢₙ₁) an das hintere Gate (*G*2,_{*T*1}) anlegen;
- eine Detektionsschaltung (DET), die so konfiguriert ist, dass sie ein Detektionssignal (s1) erzeugt, das je nach dem Widerstandszustand des magnetischen Tunnelkontakts (MTJ) variieren kann.

2. Generator (D1) für probabilistische Bits (p-Bit) nach Anspruch 1, wobei der magnetische Tunnelkontakt (MTJ) ein superparamagnetischer Tunnelkontakt ist.

3. Generator für probabilistische Bits (p-Bit) nach einem der Ansprüche 1 oder 2, wobei der Steuertransistor (T1) ein Transistor vom Typ "vollständig verarmtes Silizium-auf-Isolator" ist.

4. Generator (D1) für probabilistische Bits (p-Bit) nach einem der Ansprüche 1 bis 3, wobei die Detektionsschaltung (DET) ein Komparator (COMP) ist, der einen ersten Eingang, der mit einem ersten Ende des magnetischen Tunnelkontakts (MTJ) verbunden ist, und einen zweiten Eingang, der dazu bestimmt ist, eine Referenzspannung (V_{REF}) zu empfangen, und einen Ausgangsknoten zum Erzeugen des Detektionssignals (s1) aufweist.

5. Generator (D1) für probabilistische Bits (p-Bit) nach einem der Ansprüche 1 bis 4, der weiter eine Rechenschaltung (CALC) umfasst, die so konfiguriert ist, dass sie auf Grundlage des Detektionssignals (s1) durch Abtastung oder durch Mittelwertbildung unter Bestimmen des Anteils jedes Widerstandszustands des magnetischen Tunnelkontakts (MTJ) während eines vorbestimmten Zeitraums ein probabilistisches Bit erzeugt.

6. Generator (D1) für probabilistische Bits (p-Bit) nach einem der Ansprüche 1 bis 5, wobei der magnetische Tunnelkontakt (MTJ) umfasst:
- eine erste ferromagnetische Referenzschicht (11), worin die Richtung der magnetischen Polarisation fest ist;
- eine zweite ferromagnetische Schicht (13), worin die Richtung der magnetischen Polarisation variabel ist;
- eine Tunnelbarriereschicht (12) aus Oxid, die zwischen der ersten und der zweiten ferromagnetischen Schicht (11, 13) eingeschlossen ist.

7. Generator (D1) für probabilistische Bits (p-Bit) nach Anspruch 6, wobei die Dicke der zweiten Schicht (13) weniger als 10 nm beträgt.

8. Generator (D1) für probabilistische Bits (p-Bit) nach einem der Ansprüche 6 oder 7, wobei der Durchmesser des magnetischen Tunnelkontakts (MTJ) weniger als 100 nm beträgt.

9. Generator (D1) für probabilistische Bits (p-Bit) nach einem der Ansprüche 1 bis 8, wobei der Steuertransistor (T1) als Diode geschaltet ist.

10. Generator (D1) für probabilistische Bits (p-Bit) nach einem der Ansprüche 1 bis 8, wobei die Polarisationsschaltung (POL) ein Stromspiegel ist, der einen ersten Versorgungszweig (BA1) umfasst, der mit einem zweiten Versorgungszweig gekoppelt ist, welcher mindestens den Steuertransistor (T1) und den magnetischen Tunnelkontakt (MTJ) umfasst, die in Reihe geschaltet sind.

11. Generator (D1) für probabilistische Bits (p-Bit) nach Anspruch 10, wobei der erste Versorgungszweig (BA1) einen zweiten Steuertransistor (T2) umfasst, der eine zugehörige zweite vergrabene Isolierschicht aufweist, die ein hinteres Gate (*G*2,_{*T*2}) bildet, wobei die Steuermittel (CONT) so konfiguriert sind, dass sie eine zweite Eingangsspannung (Vᵢₙ₂) an das hintere Gate (*G*2,_{*T*2}) des zweiten Steuertransistors (T2) anlegen.

## Claims

1. Probabilistic bit (p-bit) generator (D1) comprising:
- a magnetic tunnel junction (MTJ) having a resistance which fluctuates between at least two distinct resistive states (P, AP) according to its magnetisation;
- a polarisation circuit (POL) configured to inject a control current (Ic) through the magnetic tunnel junction (MTJ) which is variable according to a first input voltage (*V*_{*in*1}); the polarisation circuit (POL) comprising:
- a control transistor (T₁) mounted in series with the magnetic tunnel junction (MTJ) between two supply nodes (VDD, GND) and comprising an isolating layer (BOX) buried in a semiconductive substrate (2) forming a rear gate (*G*2,_{*T*1});
- control means (CONT) configured to apply the first input voltage (Vᵢₙ₁) on said rear gate (*G*2_{,*T*1});
- a detection circuit (DET) configured to generate a detection signal (s1) which is variable according to the resistive state of the magnetic tunnel junction (MTJ).

2. Probabilistic bit (p-bit) generator (D1) according to claim 1, wherein the magnetic tunnel junction (MTJ) is a superparamagnetic tunnel junction.

3. Probabilistic bit (p-bit) generator according to any one of claims 1 or 2, wherein the control transistor (T1) is a " fully depleted silicon-on-insulator"-type transistor.

4. Probabilistic bit (p-bit) generator (D1) according to any one of claims 1 to 3, wherein the detection circuit (DET) is a comparer (COMP) having a first input connected to a first end of the magnetic tunnel junction (MTJ) and a second input intended to receive a reference voltage (V_{REF} ) and an output node for generating the detection signal (s1).

5. Probabilistic bit (p-bit) generator (D1) according to any one of claims 1 to 4, further comprising a circulator circuit (CALC) configured to generate a probabilistic bit from the detection signal (s1) by sampling or by mean calculation, by determining the proportion of each resistive state of the magnetic tunnel junction (MTJ) during a predetermined period.

6. Probabilistic bit (p-bit) generator (D1) according to any one of claims 1 to 5, wherein the magnetic tunnel junction (MTJ) comprises:
- a first reference ferromagnetic layer (11), wherein the direction of the magnetic polarisation is fixed;
- a second ferromagnetic layer (13), wherein the direction of the magnetic polarisation is variable;
- an oxide tunnel barrier layer (12) confined between the first and the second ferromagnetic layer (11, 13).

7. Probabilistic bit (p-bit) generator (D1) according to claim 6, wherein the thickness of the second layer (13) is less than 10nm.

8. Probabilistic bit (p-bit) generator (D1) according to any one of claims 6 or 7, wherein the diameter of the magnetic tunnel junction (MTJ) is less than 100nm.

9. Probabilistic bit (p-bit) generator (D1) according to any one of claims 1 to 8, wherein the control transistor (T1) is diode-mounted.

10. Probabilistic bit (p-bit) generator (D1) according to any one of claims 1 to 8, wherein the polarisation circuit (POL) is a current mirror comprising a first supply arm (BA1) coupled to a second supply arm comprising at least the control transistor (T1) and the magnetic tunnel junction (MTJ) mounted in series.

11. Probabilistic bit (p-bit) generator (D1) according to claim 10, wherein the first supply arm (BA1) comprising a second control transistor (T2) having a second buried isolating layer forming an associated rear gate (*G*2,_{*T*2}), the control means (CONT) being configured to apply a second input voltage (Vᵢₙ₂) on the rear gate (*G*2,_{*T*2}) of the second control transistor (T2).
